# EUROPÄISCHE PATENTSCHRIFT

(11) **EP 0 893 283 B1**
(45) Veröffentlichungstag und Bekanntmachung des Hinweises auf die Patenterteilung: **04.09.2002**
(21) Anmeldenummer: 98111694.0
(22) Anmeldetag: 25.06.1998
(51) Int. Cl.: B60C 11/04, B60C 11/13

(54) **Drehsinngebundenes Laufstreifenprofil für Fahrzeugreifen**
Directional tread profile for vehicle tyres
Profil directionnel pour bandages pneumatiques de véhicule

(30) Priorität: 14.07.1997 DE 19730068
(43) Veröffentlichungstag der Anmeldung: 27.01.1999
(73) Patentinhaber: Continental Aktiengesellschaft, 30165 Hannover (DE)
(72) Erfinder: Kossira, Christoph, 30455 Hannover (DE); Schuch, Josef, 30159 Hannover (DE)

(56) Entgegenhaltungen:
- US-A- 4 962 801
- US-A- 5 291 929
- PATENT ABSTRACTS OF JAPAN vol. 016, no. 235 (M-1257), 29. Mai 1992 (1992-05-29) & JP 04 050006 A (YOKOHAMA RUBBER CO LTD:THE), 19. Februar 1992 (1992-02-19)

## Beschreibung

Die Erfindung bezieht sich auf ein drehsinngebundenes Profil für den Laufstreifen eines Fahrzeugreifens gemäß dem Oberbegriff des Patentanspruches 1. Demgemäß weist ein gattungsgemäßes Profil in seiner Draufsicht Querrillen auf, die in einem Winkel geneigt zur Axialen verlaufen, wobei die Menge der Querrillen in zwei Scharen gegliedert ist, und zwar in eine erste Schar von Querrillen, deren Winkel zur Axialen um einen Differenzwinkel größer ist als der Winkel der zweiten Schar von Querrillen, wobei die Winkel beider Scharen von Querrillen so herum orientiert sind, dass man beim Gehen entlang der Querrillen entgegen dem Drehsinne nach axial außen gelangt. Ein solches Profil ist bekannt aus der DE-OS 42 20 677 A1 und aus dem Schwesterpatent US-PS 5,375,639.

Zum Hintergrundwissen jedes Reifenkonstrukteurs gehört die Erfahrung, dass geringes Laufgeräusch und hohe Aquaplaning-Grenzgeschwindigkeit Wünsche an einen Reifen sind, die in Konkurrenz zueinander stehen. Dies wird in den Extremen besonders deutlich: Ein Slick hat - neben hervorragendem Trockengriff - eine sehr geringe Geräuschanregung aber leider auch eine sehr geringe Aquaplaning-Grenzgeschwindigkeit. Mit Aquaplaning-Grenzgeschwindigkeit ist dabei die Geschwindigkeit gemeint, bei der der Reifen komplett aufschwimmt. Umgekehrt hätte ein Profil analog einem Traktor-Profil mit seinen extrem großen, geradlinigen, gepfeilten Negativen eine sehr hohe Aquaplaning-Grenzgeschwindigkeit (was für einen landwirtschaftlichen Traktor freilich völlig irrelevant ist) aber (auf harter Straße) ein extrem hohes Laufgeräusch.

Speziell bei Gürtelreifen stellt sich diese Konkurrenz noch verschärft dar, weil der Verdrängungsdruck, den die die Nuten formenden Rippen der Form beim Profileinprägen in der Vulkanisationsform ausüben, die Gürtellagen zu einem Unrund zu verformen droht, was zusätzlich zur direkten Luftschallanregung auch zu einer Körperschallanregung führen würde, die sich dann indirekt insbesondere über die Reifenseitenwände nach außen und über die Innenraumverkleidungen in den Innenraum hinein störend als indirekter Luftschall bemerkbar machen würde. Letztgenanntes Problem wird in der DE-OS 42 20 677 A1 dadurch angegangen, dass zusätzliche Ausweichräume für den verdrängten Kautschuk angeboten werden, sodass auch der Verdrängungsdruck gemindert wird. Dabei wird allerdings hingenommen, dass sich im Nutengrund eine Ausstülpung bildet, die die Wasseraufnahmekapazität der betreffenden Nut mindert und damit die Aquaplaning-Grenzgeschwindigkeit wieder mindert.

Um solche Ausstülpungen entbehrlich zu machen, haben sich die Erfinder die Aufgabe gestellt, auf andere Weise das Unrundwerden des Gürtels beim Prägen eines stark drainierenden Profiles zu bekämpfen, die zumindest weniger im Konflikt mit der Forderung nach hoher Wasseraufnahmekapazität steht. Dabei geht es den Erfindern insbesondere um die PKW-Reifenformate zwischen den Dimensionen 235/60 R16 und 175/70 R13 und ganz besonders um die Dimension 195/65 R15, die vor allem für Fahrzeuge der mittleren Mittelklasse wie etwa Audi 80, Audi A4, Ford Mondeo, Opel Vectra und der oberen Mittelklasse wie etwa Mercedes Benz W 124 und 5er BMW gefragt sind. Für die meisten dieser Reifen reicht der Speedindex T für 190 km/h nicht aus. Es ist an die Speedindices H (bis 210 km/h), V (bis 240 km/h) und W (bis 270 km/h) gedacht. Die angestrebten Reifen sind vorzugsweise nicht für reine Sportwagen bestimmt.

Ausgehend von den gattungsgemäßen Merkmalen, die in JP 0405006 offenbart sind, wird diese Aufgabe erfindungsgemäß dadurch gelöst, dass jede Querrille der ersten Schar genau zwei Querrillen der zweiten Schar schneidet.

Die Beschränkung auf zwei Schnittstellen ermöglicht zum einen eine höhere Anzahl von Rillen, die spitzwinklig zur Umfangsrichtung verlaufen und gleichzeitig eine relativ geringe Gesamtanzahl von Schnittstellen; dahinter verbirgt sich die Erkenntnis, dass gerade die Schnittstellen besonders deutlichen Einfluss im Sinne einer Volumenverdrängung ausüben. Durch die hohe ermöglichte Anzahl der zur Umfangsrichtung spitzwinkeligen Quernuten wird analog dem Effekt bei Erhöhung der Zylinderanzahl bei einem Verbrennungsmotor eine Vergleichmäßigung erreicht und gleichzeitig wird die verbleibende Volumenverdrängung weniger auf bestimmte Stellen, nämlich die Schnittstellen, konzentriert.

Andererseits würde eine noch geringere Anzahl von Schnittstellen zwischen den beiden Scharen von Querrillen insbesondere den Nassgriff bei Kurvenfahrt beeinträchtigen, weil der für diese Disziplin vorteilhafte Wasseraustausch zwischen beiden Rillenscharen beeinträchtigt würde.

Der genannte Differenzwinkel wird im Folgenden auch kurz als Delta bezeichnet und in den Figuren wird der entsprechende griechische Buchstabe angegeben. Analog wird der - größere - Winkel zwischen den Querrillen der ersten Schar und der Axialen als Alpha bezeichnet und der - kleinere - zwischen den Querrillen der zweiten Schar und der Axialen als Beta.

Vorzugsweise beträgt gemäß Anspruch 3 - an den Kreuzungsstellen zwischen den Querrillen der ersten und denen der zweiten Schar - der Differenzwinkel Delta zwischen dem Winkel Alpha, um den die Querrillen der ersten Schar in der Draufsicht gegenüber der Axialen geneigt sind, und dem Winkel Beta, um den die Querrillen der zweiten Schar in der Draufsicht gegenüber der Axialen geneigt sind, zwischen 40° und 60°.

Der Differenzwinkel Delta muss nicht an allen Kreuzungsstellen gleich sein: Vielmehr empfiehlt es sich, in der Abfolge über dem Umfang bei kürzeren Pitches einen kleineren Differenzwinkel Delta vorzusehen als bei längeren Pitches. Ferner empfiehlt es sich, in der Abfolge über der Axialen an den axial äußeren Kreuzungsstellen größere Differenzwinkel Delta vorzusehen als an den axial inneren.

Die Entwässerungsleistung der zweiten Schar von Querrillen, also der Querrillen, die mehr axial verlaufen, wird besonders hoch, wenn gemäß Anspruch 2 diese Querrillen der zweiten Schar in der Draufsicht jeweils einen Wendepunkt haben. Dieser Wendepunkt sollte bevorzugt in der Nähe oder genau an der axial äußeren der beiden Kreuzungsstellen mit der ersten Schar von Querrillen liegen.

Vorzugsweise weisen erfindungsgemäße Laufflächenprofile im Bereich der Pfeilungsasymptoten, die vorzugsweise die axiale Reifenmitte und der Reifenzenith ist, eine oder zwei dicht beieinander liegende, im wesentlichen gerade Umfangsrillen auf. Vorzugsweise münden die Querrillen beider Scharen an ihrem reifenmittigen Ende nicht in die vorgenannte(n) Umfangsrille(n). Die Abschottung der Querrillen von den Umfangsrillen hat zum einen mit Hinblick auf die Körperschallanregung auf den Gürtel eine beruhigende Wirkung, vermindert zum zweiten Luftsäulenschwingungen und führt überdies insbesondere auf Nässe zu einem sanfteren Querkraftabbau bei Überschreitung des zum maximalen Querkraftaufbau gehörigen Schräglaufwinkels, sodass der Reifen etwas gutmütiger wirkt als ein reiner Sportreifen.

Vorzugsweise hat jede Quernut der ersten Schar irgendeine Verbindung zum nächstliegenden axial äußeren Laufflächenrand. Dies kann in an sich bekannter Weise dadurch erreicht werden, dass eine solche Quernut nach ihren zwei Kreuzungsstellen mit Quernuten der zweiten Schar schließlich in eine Quernut der zweiten Schar mündet und nur diese - quasi dritte - Quernut der zweiten Schar bis zum Laufflächenrand, das heißt zumindest bis zum axial äußeren Rand der Bodenaufstandsfläche, geführt ist. Vorzugsweise aber knickt gemäß Anspruch 5 jede Quernut der ersten Schar nach ihren zwei Kreuzungsstellen so ab, dass der abgeknickte, axial äußere Ast dieser Quernut parallel zu den benachbarten Quernuten der zweiten Schar verläuft.

Wenn die Querrillen der ersten Schar durch Einmündung in je eine Querrille der zweiten Schar mit dem jeweiligen Laufflächenrand verbunden sind, dann ergibt sich zwischen dem im Drehsinne nachlaufenden, zum Laufflächenrand hin weisenden Ende der Querrillen der ersten Schar und dem axial weiter innen befindlichen mittleren Bereich der nacheilenden Quernut der selben, also ersten, Schar, ein relativ schmales, zum nachlaufenden Ende hin durch eine Quernut der zweiten Schar begrenztes Positiv, das einer schmalen, parallelogrammförmigen Insel ähnlich sieht.

Wenn hingegen - wie gemäß Anspruch 5 bevorzugt - jede Querrille der ersten Schar nach ihren zwei Kreuzungsstellen mit Querrillen der zweiten Schar so abknickt, dass der abgeknickte, axial äußere Ast dieser Quernut parallel zu den benachbarten Quernuten der zweiten Schar verläuft, dann ergibt sich zwischen dem Nutenbereich, der zwischen der im Drehsinne nachlaufenden Kreuzungsstelle und der Abknickstelle liegt, und dem axial weiter innen befindlichen mittleren Bereich der nacheilenden Quernut der selben, also ersten, Schar, ein relativ schmales, zum nachlaufenden Ende hin durch eine Quernut der zweiten Schar begrenztes Positiv, das einer schmalen Halbinsel ähnlich sieht.

Zwischen dem voreilenden, zur Reifenmitte hin weisenden Ende (="Quelle") der Quernuten der ersten Schar und dem axial weiter außen befindlichen mittleren Bereich der voreilenden Quernut der selben, also ersten, Schar, ergibt sich ein relativ schmales, zum nachlaufenden Ende hin durch eine Quernut der zweiten Schar begrenztes Positiv, das einer schmalen Halbinsel ähnlich sieht.

Die zuvor erläuterte Schmalheit in axialer Richtung der Inseln bzw. Halbinseln könnte nachteiligerweise, insbesondere bei Reifenbreiten von 205 mm und darunter, zu einer zu großen Biegeweichheit dieser Positivbereiche gegenüber Belastungen durch Reifenquerkräfte, wie sie bei scharfer Kurvenfahrt auftreten, führen. Um dieses zu verhindern, werden vorzugsweise erstgenannte Inseln bzw. Halbinseln nach axial außen hin "angebunden" und/oder es werden vorzugsweise letztgenannte Halbinseln nach axial innen hin "angebunden".

Mit "anbinden" ist in diesem Zusammenhange gemeint, dass zumindest stellenweise die Tiefe der Nut zwischen den aneinander zu bindenden Positiven reduziert ist.

Zur Anbindung der erstgenannten Inseln bzw. Halbinseln sollten also die Nuten der ersten Schar zwischen der zweiten, also axial äußeren, Kreuzungsstelle mit einer Nut der zweiten Schar und der Einmündungsstelle bzw. der Abknickstelle mindestens stellenweise - vorzugsweise im ganzen genannten Abschnitt - eine verminderte Rillentiefe aufweisen.

Zur Anbindung der zweitgenannten Halbinseln sollten also die Nuten der ersten Schar zwischen ihrer jeweiligen Einmündung in eine Umfangsnut oder - bei der bevorzugten Ausführung ohne axial innere Einmündung in eine Umfangsnut - ihrer jeweiligen Quelle, und der ersten, also axial inneren, Kreuzungsstelle mit einer Nut der zweiten Schar mindestens stellenweise - vorzugsweise im ganzen genannten Abschnitt - eine verminderte Rillentiefe aufweisen.

Beide bevorzugten Anbindungen zusammenfassend gelangt man zur Ausbildung gemäß Anspruch 6, wonach die Querrillen der ersten Schar unterschiedliche Profiltiefen haben, wobei sie nur zwischen den beiden Kreuzungsstellen mit den Querrillen der zweiten Schar ihre größte Profiltiefe haben, in den anderen Bereichen hingegen eine um mindestens 30 % demgegenüber verringerte Profiltiefe haben.

Eine solche Ausführung hat neben der wie erläutert besseren Querkraftübertragungsfähigkeit und entsprechend besserem Trockenhandling zudem den Vorteil, dass die Kautschukvolumenverdrängung über der Umfangsrichtung stetiger ist, was den Rundlauf fördert.

Bei einer Ausführung mit voller Rillentiefe über die gesamte Länge der Rillen der ersten Schar droht zudem eine Konzentration von Walkarbeit auf den Grund dieser Rillen, die wegen der dortigen Schwächung des Biegewiderstandes ähnlich wie Scharniere wirken. Dies kann neben Nachteilen im Alterungsverhalten den Gleichlauf beeinträchtigen.

Ferner reduziert die Schwankung der Rillentiefe den Anteil des Abrollgeräusches, der durch Luftsäulenresonanz in der Rille entsteht.

Die Erfindung wird nachfolgend anhand von drei Figuren näher erläutert. Es zeigt:
- Fig. 1: eine Gesamtansicht eines erfindungsgemäßen Reifens,
- Fig. 2: die Draufsicht auf einen abgewickelten Ausschnitt des selben Reifens und
- Fig. 3: einen Schnitt entlang einer Querrille der ersten Schar bis zu deren Abknickung in einen axial äußeren Ast.

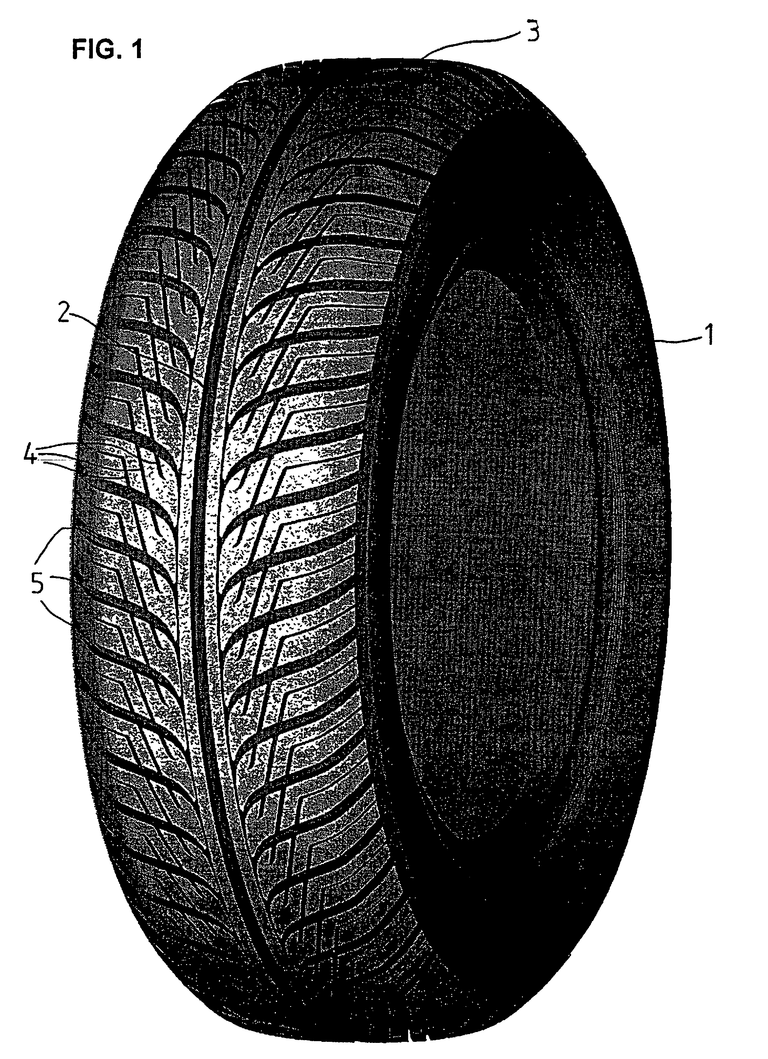

Figur 1 zeigt eine Gesamtansicht eines erfindungsgemäßen Reifens 1 mit einem drehsinngebundenen Profil 3 auf dem Laufstreifen. Zu erkennen ist die bevorzugte Anordnung einer geraden Umfangsrille 2 als axial innere Asymptote der in an sich bekannter Weise bevorzugt S-förmig geschwungenen und gepfeilten Querrillen 5 der zweiten Schar. Bei der gezeigten und bevorzugten Ausführung in nicht seitengebundener Weise - in der Umgangssprache der Reifenkonstrukteure auch als "symmetrische" Weise bezeichnet, auch wenn dies angesichts eines Phasenversatzes der linken und der rechten Reifenhälfte gegeneinander um etwa eine halbe Pitch-Länge oder um einen anderen Versatz (vorzugsweise nach DE-PS 43 32 811 C2) nicht ganz genau ist - ist diese Umfangsrille 2 genau in der axialen Mitte des Reifens 1 angeordnet.

Wichtig ist, dass die im wesentlichen axial verlaufenden Querrillen 5 der zweiten Schar von stärker zur Axialen geneigten Querrillen 4 der ersten Schar von Querrillen je 2-fach geschnitten werden.

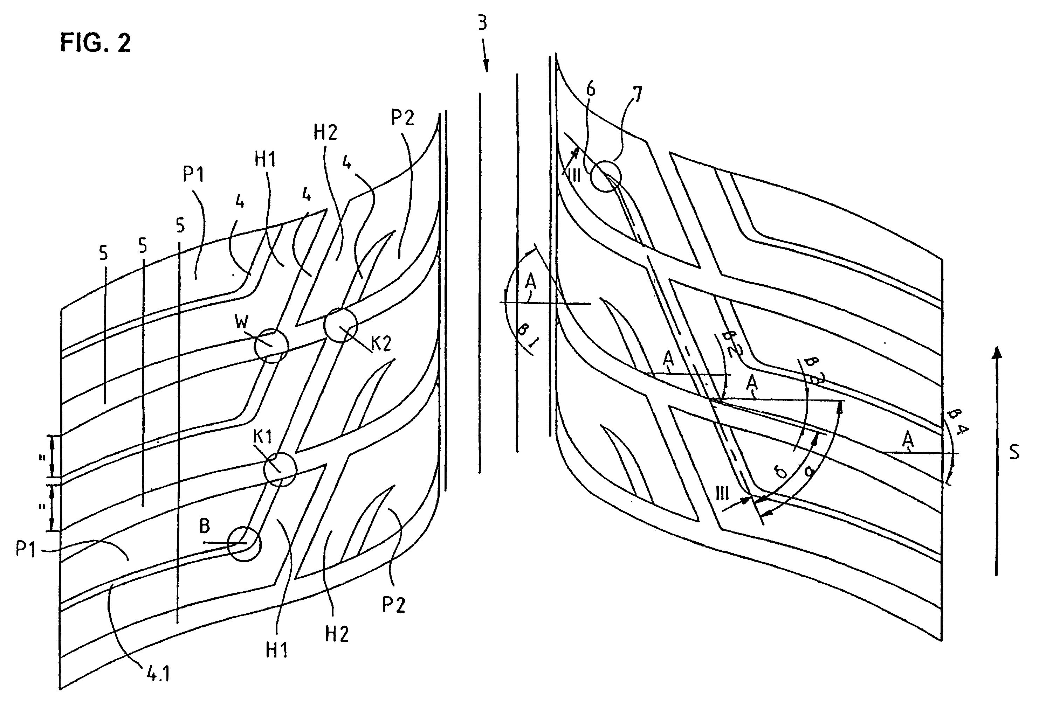

Figur 2 zeigt die Draufsicht auf einen abgewickelten Ausschnitt des selben Profiles 3. Dargestellt sind drei aufeinanderfolgende Querrippen, die durch jeweils eine Querrille 5 der zweiten Schar nach vorne und hinten begrenzt sind.

Nur um nicht vom Erfindungswesentlichen abzulenken, sind hier, wie schon in Figur 1, die drei aufeinanderfolgenden Pitch-Längen (oder bei noch feinerer Unterteilung die sechs aufeinanderfolgenden Pitch-Längen) alle gleichlang gewählt; selbstverständlich können die Pitch-Längen auch - wie aus Geräuschgründen bevorzugt und an sich bekannt - über dem Umfang variieren.

Am voreilenden, axial inneren Ende 6, auch "Quelle" genannt, entspringt jede Querrille 4 etwa mittig in einem umgebenden Positiv 7. Die Querrille 4 entfernt sich bevorzugt - wie dargestellt - in einer trompetenartigen Erweiterung von ihrer Quelle 6. Beim weiteren Abrollen des Reifens kommt zunächst die Kreuzungsstelle K2 in Bodenkontakt, danach die Kreuzungsstelle K1 und danach die Abknickstelle B. Zwischen ihrer Quelle 6 und ihrer Abknickungsstelle B verläuft vorzugsweise jede Querrille 4 der ersten Schar zumindest im wesentlichen, vorzugsweise exakt [wie hier gezeigt], geradlinig, zumindest nicht so stark S-förmig geschwungen, wie dies für die Querrillen 5 der zweiten Schar bevorzugt und gezeigt ist.

Wegen der S-Krümmung der Querrillen 5 der zweiten Schar ist deren Neigung zur Axialen A nicht überall gleich: An einer Position I in der Nähe ihres axial inneren Endes beträgt Beta₁ 63°, an einer Position II entsprechend einer Kreuzungsstelle K2 beträgt Beta₂ 23°, an einer Position III entsprechend einer Kreuzungsstelle K1 beträgt Beta₃ 15° und an einer Position IV an der axial äußeren Grenze der Bodenaufstandsfläche beträgt Beta₄ 24°. Wo immer in dieser Anmeldung in vereinfachender Ausdrucksweise von "dem" Winkel Beta gesprochen ist, ohne die Position genau zu benennen, ist immer die Position III, gleichbedeutend mit der Kreuzungsstelle K1, gemeint.

Bei - nicht bevorzugter und nicht dargestellter - Krümmung auch der Querrillen 4 der ersten Schar, ist als Winkel Alpha analog der Winkel an einer Kreuzungsstelle K1 zur Axialen A gemeint. Bei der - bevorzugten und gezeigten - geradlinigen Ausführung der Querrillen 4 zwischen ihrer Quelle 6 und ihrer Abknickung B ist hingegen auch ohne nähere Erläuterung der Position die Angabe bereits eines einzigen Winkels Alpha klar und eindeutig; im hier gezeigten Beispiel beträgt Alpha 67°. Demzufolge beträgt bei dieser Ausführung der Winkel Delta 67° - 15° = 52°.

Diese einfache Darstellung für die Winkelverhältnisse verkompliziert sich etwas bei Mitbetrachtung von Pitchlängen-Variationen: Bei der - zweckmäßigen - Konstanthaltung der jeweiligen Axialkoordinaten der Eckpunkte wird sich bei einem längeren Pitch Alpha etwas größer und bei einem kürzeren Pitch etwas kleiner einstellen. Vorzugsweise aber werden die Querrillen 5 der zweiten Schar nur in der Umfangsrichtung entsprechend geschoben, sodass die Abfolge der Winkel Beta von der Pitchlängenvariation unbeeinflusst bleibt. Demzufolge ist der Differenzwinkel Delta am kürzesten Pitch am kleinsten und am längsten Pitch am größten. Bei den üblichen maximalen Pitchlängenverhältnissen macht dies etwa +/- 3° aus von einer mittleren Pitchlänge aus gerechnet.

Das Wort "einen" in dem Merkmal des Oberbegriffes des Anspruches 1, wonach der Winkel Alpha der Querrillen 4 der ersten Schar um "einen" Differenzwinkel Delta größer ist als der Winkel Beta der Querrillen 5 der zweiten Schar ist also nicht im Sinne von "einen einzigen" zu verstehen, sondern nur als unbestimmter Artikel. Bevorzugt liegt Delta zwischen 40° und 60°, besonders bevorzugt zwischen 42° und 56°, Alpha zwischen 60° und 75° und Beta3 zwischen 12° und 24°.

Weil hier - wie gemäß Anspruch 5 bevorzugt - jede Querrille 4 der ersten Schar nach (im Drehsinne) ihren zwei Kreuzungsstelle K2 und K1 mit Querrillen 5 der zweiten Schar an je einer Stelle B so abknickt, dass der abgeknickte, axial äußere Ast 4.1 diese Quernut 4 parallel zu den benachbarten Quernuten 5 der zweiten Schar verläuft, ergibt sich zwischen dem Nutenbereich, der zwischen der im Drehsinne S nachlaufenden Kreuzungsstelle K1 und der Abknickstelle B liegt, und dem axial weiter innen befindlichen mittleren Bereich der nacheilenden Quernut 4 ein schmales, zum nachlaufenden Ende hin durch eine Quernut 5 der zweiten Schar begrenztes Positiv H1, das einer schmalen Halbinsel ähnlich sieht.

Durch Verringerung der Tiefe t von t1 auf t2 des Bereiches der Nut 4, der die Halbinsel H1 von dem axial äußeren Positiv P1 trennt, kann sich die Halbinsel H1 stärker gegen das axial äußere Positiv P1 abstützen.

Zwischen dem im Drehsinne S vorlaufenden, zur Reifenmitte hin weisenden Ende der Quernuten 4 der ersten Schar - also dem Bereich zwischen der Quelle 6 und der Kreuzungsstelle K2 - und dem axial weiter außen befindlichen mittleren Bereich zwischen den Kreuzungsstellen K2 und K1 der voreilenden Quernut 4 der selben, also ersten, Schar, ergibt sich ein weiteres relativ schmales, zum nachlaufenden Ende hin durch eine Quernut 5 der zweiten Schar begrenztes Positiv H2, das einer schmalen Halbinsel ähnlich sieht.

Durch Verringerung der Tiefe t von t1 (das für die volle Tiefe steht) auf t2 des Bereiches der Nut 4, der die Halbinsel H2 von dem axial inneren Positiv P2 trennt, kann sich die Halbinsel H2 stärker gegen das axial innere Positiv P2 abstützen.

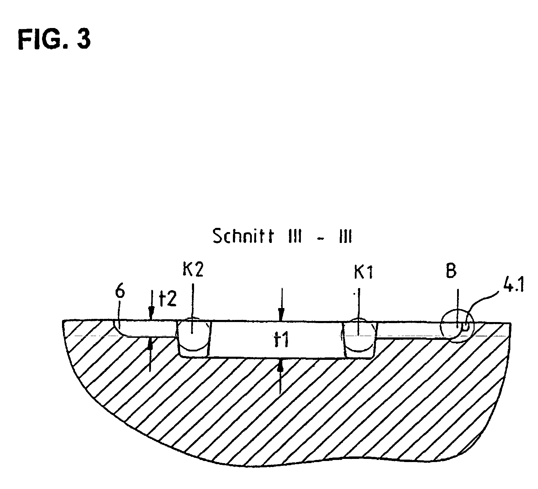

Figur 3 zeigt einen Schnitt gemäß der in Figur 2 angegebenen gestrichelten Linie III-III. Der Schnitt verläuft entlang einer Querrille 4 der ersten Schar bis zu deren Abknickung B in einen axial äußeren Ast 4.1, welcher parallel zu den benachbarten Querrillen 5 der zweiten Schar verläuft. Zu erkennen ist, dass die Nuttiefe in der Nähe der Quelle 6 zunächst nur einen geringen Wert t2 hat, dann an der Kreuzungsstelle K2 auf einen größeren Wert t1 ansteigt und an der Kreuzungsstelle K1 wieder auf einen Wert t1 abfällt, der bis zur Abknickung B beibehalten wird. t1 beträgt bei PKW-Reifen vorzugsweise je nach Dimension 7,0 mm bis 9,0 mm und t2 zwischen 3,0 und 5,2 mm.

Eine Bezugszeichenliste ist Bestandteil der Beschreibung.

### Bezugszeichenliste:

- 1: Reifen
- 2: Umfangsrille
- 3: Laufflächenprofil
- 4: Querrillen (= Quernuten) der ersten Schar
4.1 so abgeknickter Ast anschließend an eine Querrille 4 nach axial außen hin, dass er parallel zu benachbarten Querrillen 5 verläuft
- 5: Querrillen (= Quernuten) der zweiten Schar
- 6: axial inneres Ende, auch "Quelle" genannt, einer Querrille 4
- 7: Positiv, welches eine "Quelle" einer Querrille 4 beherbergt

- t: Tiefe von Rillen 4
t1 verminderte Rillentiefe
t2 volle Rillentiefe, also wie die Tiefe der Umfangsrille 2 oder der Rillen 5

- A: Axiale
- B: Abknickstelle, wo die Querrille 4 in einen axial äußeren Ast 4.1 übergeht

- H1: Halbinsel in der Nähe von B
- H2: Halbinsel in der Nähe von 6

- K1: im Drehsinn S nacheilende Kreuzungsstelle zwischen Nuten 4 und 5
- K2: im Drehsinn S voreilende Kreuzungsstelle zwischen Nuten 4 und 5

- P1: Positiv axial außen von H1
- P2: Positiv axial innen von H2

- S: Drehsinn des Profiles 3

- Alpha: Neigung der Querrillen 4 in der Draufsicht gegenüber der Axialen A in dem axial inneren Bereich vor der Abknickung in den Ast 4.1
- Beta: Neigung der Querrillen 5 in der Draufsicht gegenüber der Axialen A
Beta 1 bis Beta 4 Neigung Beta an verschiedenen, von axial innen nach axial außen durchgegangenen Positionen

## Patentansprüche

1. Drehsinngebundenes Profil (3) für den Laufstreifen eines Fahrzeugreifens (1)
- mit Querrillen (4, 5), die in der Draufsicht auf das Profil (3) in einem Winkel geneigt zur Axialen (A) verlaufen,
- wobei die Menge der Querrillen (4, 5) in zwei Scharen gegliedert ist, und zwar in eine erste Schar von Querrillen (4), deren Winkel zur Axialen um einen Differenzwinkel größer ist als der Winkel der zweiten Schar von Querrillen (5),
- wobei die Winkel beider Scharen von Querrillen (4, 5) so herum orientiert sind, dass man beim Gehen entlang der Querrillen (4, 5) entgegen dem Drehsinne (S) nach axial außen gelangt,
- wobei jede Querrille (4) der ersten Schar nach einer Kreuzungsstelle (K1) mit einer Querrille (5) der zweiten Schar abknickt, dass der abgeknickte, axial äußere Ast (4.1) dieser Querrille (4) parallel zu den benachbarten Querrillen (5) der zweiten Schar verläuft
- und wobei im Bereich der Pfeilungsasymptoten beider Scharen von Querrillen (4, 5) eine gerade Umfangsrille (2) angeordnet ist
**dadurch gekennzeichnet,**
- **dass** jede Querrille (4) an ihrem axial inneren Ende (6) in einem umgebenden Positiv (7) entspringt und
- **dass** jede Querrille (4) der ersten Schar genau zwei Querrillen (5) der zweiten Schar in zwei Kreuzungsstellen (K1, K2) schneidet.

2. Profil (3) nach Anspruch 1, **dadurch gekennzeichnet, dass** jede Querrille (5) der zweiten Schar in der Draufsicht einen Wendepunkt (W) hat.

3. Profil (3) nach einem der voran gehenden Ansprüche, **dadurch gekennzeichnet, dass** der Differenzwinkel (Delta) zwischen dem Winkel (Alpha), um den die Querrillen (4) der ersten Schar in der Draufsicht gegenüber der Axialen (A) geneigt sind, und dem Winkel (Beta), um den die Querrillen (5) der zweiten Schar in der Draufsicht gegenüber der Axialen (A) geneigt sind, zwischen 40° und 60° beträgt.

4. Profil (3) nach einem der voran gehenden Ansprüche, **dadurch gekennzeichnet, dass** jede Querrille (4) der ersten Schar eine Verbindung zum nächstliegenden, axial äußeren Rand (R) der Bodenaufstandsfläche hat.

5. Profil (3) nach Anspruch 1, **dadurch gekennzeichnet, dass** die Querrillen (4) der ersten Schar unterschiedliche Profiltiefen (t, t1, t2) haben, wobei sie (4) nur zwischen den beiden Kreuzungsstellen (K1, K2) mit den Querrillen (5) der zweiten Schar ihre größte Profiltiefe (t) haben, in den anderen Bereichen hingegen eine um mindestens 30 % demgegenüber verringerte Profiltiefe t1, t2) haben.

## Claims

1. Profile (3), which is adapted to the direction of rotation, for the tread strip of a vehicle tyre (1),
- said profile having transverse grooves (4, 5) which, when the profile (3) is viewed from above, extend inclinedly at an angle relative to the axial (A),
- the quantity of transverse grooves (4, 5) being arranged in two groups, namely a first group of transverse grooves (4), the angle of which relative to the axial is greater by a differential angle than the angle of the second group of transverse grooves (5),
- the angles of both groups of transverse grooves (4, 5) being so orientated therearound that, when travelling along the transverse grooves (4, 5), one passes axially outwardly in opposition to the direction of rotation (S),
- each transverse groove (4) of the first group bending after an intersection (K1) with a transverse groove (5) of the second group so that the bent, axially outer branch (4.1) of this transverse groove (4) extends parallel to the adjacent transverse grooves (5) of the second group,
- and a straight circumferential groove (2) being disposed in the region of the sweepback asymptotes of both groups of transverse grooves (4, 5),
**characterised in that**
- each transverse groove (4) originates at its axially inner end (6) in a surrounding positive (7), and **in that**
- each transverse groove (4) of the first group intersects exactly with two transverse grooves (5) of the second group at two intersections (K1, K2).

2. Profile (3) according to claim 1, **characterised in that** each transverse groove (5) of the second group has a turning point (W) when viewed from above.

3. Profile (3) according to one of the preceding claims, **characterised in that** the differential angle (delta) between the angle (alpha), by which the transverse grooves (4) of the first group are inclined relative to the axial (A) when viewed from above, and the angle (beta), by which the transverse grooves (5) of the second group are inclined relative to the axial (A) when viewed from above, is between 40° and 60°.

4. Profile (3) according to one of the preceding claims, **characterised in that** each transverse groove (4) of the first group has a connection with the nearest axially outer edge (R) of the ground-engaging surface.

5. Profile (3) according to claim 1, **characterised in that** the transverse grooves (4) of the first group have different profile depths (t, t1, t2), wherein they (4) have their greatest profile depth (t) only between the two intersections (K1, K2) with the transverse grooves (5) of the second group, but they have a profile depth (t1, t2), which is reduced by at least 30 % by comparison, in the other regions.

## Revendications

1. Profil (3) lié au sens de rotation des roues pour la bande de roulement d'un pneumatique de véhicule (1)
- présentant des cannelures transversales (4, 5) qui, en vue de dessus du profil (3), sont orientées sous un angle d'inclinaison par rapport à l'axe (A),
- dans lequel la quantité des cannelures transversales (4, 5) se divise en deux faisceaux et de façon plus précise en un premier faisceau de cannelures transversales (4) dont l'angle avec l'axe est, d'une certaine différence angulaire, supérieur à l'angle du second faisceau de cannelures transversales (5),
- dans lequel les angles des deux faisceaux de cannelures transversales (4, 5) sont orientés de façon qu'en allant le long des cannelures transversales (4, 5), en sens opposé au sens de rotation de la roue (S), on parvient vers l'extérieur, vu selon la direction axiale,
- dans lequel chaque cannelure transversale (4) du premier faisceau forme, après un point de croisement (K1) avec une cannelure transvcrsalc (5) du second faisceau, une ligne brisée, de façon que la branche repliée (4.1), extérieure, vu selon la direction axiale, de cette cannelure transversale (4) soit orientée parallèlement aux cannelures transversales voisines (5) du second faisceau
- et dans lequel une cannelure périphérique droite (2) est disposée au voisinage des asymptotes des orientations des deux faisceaux de cannelures transversales (4, 5),
**caractérisé par le fait**
- **qu'**à son extrémité intérieure (6), vu selon la direction axiale, le fond de chaque cannelure transversale (4) remonte en une marche qui entoure cette extrémité et
- **que** chaque cannelure transversale (4) du premier faisceau recoupe exactement deux cannelures transversales (5) du second faisceau en deux points de croisement (K1, K2).

2. Profil (3) selon la revendication 1, **caractérisé par le fait que**, en vue de dessus, chaque cannelure transversale (5) du second faisceau présente un point d'inflexion (W).

3. Profil (3) selon l'une des revendications précédentes, **caractérisé par le fait que** la différence angulaire (delta) entre l'angle (alpha) dont les cannelures transversales (4) du premier faisceau sont, en vue de dessus, inclinées par rapport à l'axe (A), et l'angle (bêta) dont les cannelures transversales (5) du second faisceau sont, en vue de dessus, inclinées par rapport à l'axc (A), vaut entre 40° et 60°.

4. Profil (3) selon l'une des revendications précédentes, **caractérisé par le fait que** chaque cannelure transversale (4) du premier faisceau présente une liaison avec le bord extérieur le plus proche (R), vu selon la direction axiale, de la surface d'appui au sol.

5. Profil (3) selon la revendication 1, **caractérisé par le fait que** les cannelures transversales (4) du premier faisceau ont des profondeurs de profil différentes (t, t1, t2), étant précisé qu'elles n'ont leur plus grande profondeur de profil (t) qu'entre les deux points de croisement (K1, K2) avec les cannelures transversales (5) du second faisceau et que par contre dans les autres zones elles ont une profondeur de faisceau (t1, t2) réduite d'au moins 30 % par rapport à cette plus grande profondeur.
